(19) Europäisches Patentamt
European Patent Office
Office européen des brevets

(11) Veröffentlichungsnummer: **0 339 661 B1**

(12) **EUROPÄISCHE PATENTSCHRIFT**

(45) Veröffentlichungstag der Patentschrift: **20.04.94**

(51) Int. Cl.[5]: **C09B 11/24**, C09B 19/00

(21) Anmeldenummer: **89107708.3**

(22) Anmeldetag: **27.04.89**

# (54) Photochrome Substanzen (IV).

(30) Priorität: **29.04.88 DE 3814631**

(43) Veröffentlichungstag der Anmeldung:
**02.11.89 Patentblatt 89/44**

(45) Bekanntmachung des Hinweises auf die Patenterteilung:
**20.04.94 Patentblatt 94/16**

(84) Benannte Vertragsstaaten:
**AT BE CH DE ES FR GB IT LI LU NL SE**

(56) Entgegenhaltungen:
**EP-A- 0 227 337**
**EP-A- 0 245 020**
**WO-A-85/02619**

(73) Patentinhaber: **Optische Werke G. Rodenstock**
**Isartalstrasse 43**
**D-80469 München(DE)**

(72) Erfinder: **Melzig, Manfred, Dr.**
**Sonnenstrasse 11**
**D-8031 Wessling(DE)**

(74) Vertreter: **Münich, Wilhelm, Dr.**
**Kanzlei Münich, Steinmann, Schiller**
**Wilhelm-Mayr-Str. 11**
**D-80689 München (DE)**

**EP 0 339 661 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf photochrome Verbindungen, d.h. auf Substanzen, deren Absorptionseigenschaften sich entsprechend der Umgebungsbeleuchtung ändern, so daß sich auch die Einfärbung von mit diesen Substanzen gefärbten Materialien entsprechend der Umgebungsbeleuchtung in Intensität und Farbeindruck ändert.

Photochrome Substanzen haben eine Vielzahl von Anwendungsmöglichkeiten, beispielsweise werden sie zur Herstellung von photochromen Sonnenschutz-Brillengläsern aus Kunststoff, von Brillenfassungen etc. verwendet.

Photochrome Substanzen sind beispielsweise aus den US-PSen 3 562 172, 3 578 602, 4 215 010, der DE-OS 29 36 255, der WO 85/02619 oder der WO 87/00524 bekannt.

Zu den Eigenschaften und insbesondere den Nachteilen der in den vorstehend genannten Druckschriften mit Ausnahme der aus der WO 87/00524 bekannten photochromen Substanzen wird auf die ausführliche Diskussion in der Beschreibungseinleitung der WO 87/00524 verwiesen. Auf diese Druckschrift wird im übrigen zu allen hier nicht näher erläuterten Begriffen ausdrücklich Bezug genommen.

Die aus der WO 87/00524 bekannten phototropen Substanzen haben den Vorteil, daß die Moleküle insbsondere beim Einlagern in Kunststoffmaterialien nur vergleichsweise geringe Migrationsneigungen haben und daß der Farbeindruck nicht "so intensiv blau" wie bei den aus den weiter genannten Druckschriften bekannten Substanzen ist.

Es hat sich jedoch herausgestellt, daß auch bei den aus der WO 87/00524 bekannten Substanzen eine weitere Verbesserung der Migrationseigenschaften, der Farbeindrucks und der Lebensdauer wünschenswert wäre.

Der Erfindung liegt die Aufgabe zugrunde, phototrope Verbindungen anzugeben, die sich beispielsweise zur Herstellung von getönten Brillengläsern aus Kunststoffmaterial eignen und deren Migrationseigenschaften, Farbeindruck und Lebensdauer weiter verbessert ist.

Eine erfindungsgemäße Lösung dieser Aufgabe ist mit ihren Weiterbildungen in den Patentansprüchen gekennzeichnet.

Die erfindungsgemäßen Verbindungen der im Anspruch 1 angegebenen allgemeinen Formel haben überraschenderweise eine Reihe von Vorteilen:
Der sperrige Molekülaufbau verhindert die Migration der Moleküle in Kunststoffmaterialen. Diese ist insbesondere dann wichtig, wenn die Materialien erhöhter Temperatur ausgesetzt werden, wie dies beispielsweise bei Aufdampfprozessen zum Aufbringen von Entspiegelungsschichten oder auch in KFZ-Handschuhfächern der Fall ist.

Das konjugierte (Aromat)-Diazol-Naphthoxazin- bzw. das entsprechende Oxaxol-, Thiazol-, Benzoxazol- und Benzthiazol-System ergibt eine sehr intensive Absorption im Wellenlängenbereich größer als 350 nm und damit eine hohe Sensibilität gegen Sonnenlicht.

Der Diazol- bzw. Oxaxol-, Thiazol-, Benzoxazol- und Benzthiazol -Ring in 5′-, 6′-, 8′- oder 9′- Stellung ergibt gegenüber sonst gleich aufgebauten nicht in diesen Stellungen substituierten Molekülen eine Verschiebung des Absorptionsmaximums um ca. 20 bis 40 nm zu längeren Wellenlängen hin. Damit lassen sich kosmetisch ansprechendere grünliche Färbungen erzeugen. Diese ist insbesondere beim Einsatz der erfindungsgemäßen Substanzen in Sonnenschutzgläsern oder getönten Billengläsern von großer Bedeutung.

Gegenüber sonst gleichaufgebauten, in 5′-Stellung bzw. 8′-Stellung mit beispielsweise $-COOCH_3$, $-COOC_6H_5$, $-CONHC_6H_5$ substituierten Molekülen weisen die erfindungsgemäßen Verbindungen eine mehrfach höhere Lebensdauer auf.

Weiterhin haben die erfindungsgemäßen Verbindung aber die gleichen Vorteile insbesondere hinsichtlich der Temperaturabhängigkeit des phototropen Effekts wie die in der WO 87/00524 beschriebenen Verbindungen.

Die Erfindung wird nachstehend anhand von Ausführungsbeispielen näher erläutert.

Im folgenden wird die Herstellung zweier erfindungsgemäßer Verbindungen im einzelnen erläutert. Ferner werden die Daten weiterer Verbindungen, die sich analog herstellen lassen, angegeben. Es versteht sich jedoch von selbst, daß die beschriebenen Verbindungen auch anders hergestellt werden können, bzw. daß mit den beschriebenen Verfahren auch andere erfindungsgemäße Verbindungen entsprechend dem allgemeinen Anspruch hergestellt werden können:

Beispiel 1

7,9g (55 mMol) Acetimidsäure-ethylester-hydrochlorid und 10g (50 mMol) 3-Hydroxy-naphthalin-2-carbonsäure-hydrazid werden in 100 ml 1-methyl-2-pyrrolidon 1 h bei 125-128 °C gerührt. Nach dem Abkühlen wird die Reaktionsmischung in 500 ml Eiswasser gegossen. Der Niederschlag wird abfiltriert und mit Wasser gewaschen, anschließend in Vakuum getrocknet.

Das Produkt wird in 75 ml Eisessig suspendiert, dazu werden 18,6 g $NaNO_2$ als konzentrierte wässrige Lösung bei 5-10 °C eingetropft. Nach 3 h Rühren bei 10 ° wird das Gemisch auf 200 ml Eiswasser gegeben. Der orange Niederschlag wird abfiltriert, mit Wasser gewaschen und bei 60 °C im Vakuum getrocknet.

9g des Nitrosoprodukts werden mit 9 g 1,3,3,-Trimethyl-2-methylenindolin in 300 ml Ethanol unter Zusatz von 2 ml Piperidin 3 h unter Rückfluß gekocht. Nach Abzug des Lösemittels wird die Reaktionsmischung über $Al_2O_3$ mit Methylenchlorid chromatographiert. Nach Abzug des Eluierungsmittels verbleibt 5′-(5′-Methyl-2-oxaxiazolyl)-1,3,3-trimethylspiro (indolino-2,3′-3H - naphth (2,1-b) (1,4) oxazin) in Form eines hellgelben Pulvers vom Schmelzpunkt 169 °C.

Die so hergestellte Verbindung hat folgende NMR-Daten:

| | |
|---|---|
| 1H-MR($CDC1_3$): | 1,37; s; 6H 3,3-$(Ch_3)_2$ |
| | 2,16; s; 3H Oxadiazolyl-$CH_3$ ($R_7$) |
| | 2,66; s; 3H N-$CH_3$ |
| | 7,77; s; 1H 2′-H |
| | 8,40; s; 1H 6′-H |
| | 8,53; m; 1H 10′-H |

Das gleiche Produkt kann auch auf folgendem Wege erhalten werden:

18g $P_2O_5$ und 10g $H_3PO_4$ werden unter Feuchtigkeitsausschluß auf 80 °C gebracht. Man gibt 2 g (10mmol) 3-Hydroxy-naphthalin-2-carbonsäure-hydrazid und 0,6 g (10mmol) Essigsäure zu und rührt 4 h bei 80 °C. Nach dem Abkühlen auf 60 °C läßt man die Mischung in Eiswasser einlaufen. Der abfiltrierte Niederschlag wird mit Wasser gewaschen und getrocknet. Nitrosierung und Umsetzung mit Indolinbase erfolgen wie vorbeschrieben.

Im folgenden sollen weitere Beispiele für erfindungsgemäße Verbindungen angegeben werden, die in analoger Weise erhalten werden:

Beispiel 2

5′-(5′-Phenyl-2-oxadiazolyl)-1,3,3-trimethyl spiro (indolino-2,3′-3H-naphth(2,1-b)(1,4)oxazin)
Benzoesäure 1,3,3-Trimethyl-2-methylen-indolin

| | |
|---|---|
| Smp: | 188 °C |
| $^1$H-NMR ($CDC1_3$: | 1,37; s; 6H; 3,3-$(CH_3)_2$ |
| | 2,71; s; 3H; N-$CH_3$ |
| | 7,71; s; 1H; 2′-H |
| | 8,29; s; 1H; 6′-H |
| | 8,45; m; 1H; 10′-H |

Beispiel 3

5-Amino-5′-(5′-Phenyl-2-oxadiazolyl)-1,3,3-trimethylspiro (indolin-2,3′-3H-naphth(2,1-b)(1,4)oxazin)
Benzoesäure 5 Amino-1,3,3-trimethyl-2-methylen-indolin

| | |
|---|---|
| Smp: | 152 °C (Z.) |
| $^1$H-NMR ($CDC1_3$): | 1,32; s; 6H; 3,3-$(CH_3)_2$ |
| | 2,62; s; 3H; N-$CH_3$ |
| | 3,12; br; 2H; $NH_2$ |
| | 6,43; s; 1H; 4-H |
| | 7,69; s; 1H; 2′-H |

5′-(5-Phenyl-2-oxadiazolyl)-5-methoxy-1,3,3-trimethylspiro (indolin-2,3′-3H-naphth(2,1-b)(1,4)oxazin
Benzoesäure 5-Methoxy-1,3,3-trimethyl-2-methylen-indolin

| | |
|---|---|
| Smp: | 219 °C |
| $^1$H-NMR ($CDC1_3$): | 1,32; s; 6H; 3,3-$(CH_3)_2$ |
| | 2,60; s; 3H; N-$CH_3$ |
| | 3,78; s; 3H; 5-$OCH_3$ |
| | 7,67; s; 1H; 2′-H |
| | 8,33; s; 1H; 6′-H |

Beispiel 5

5′-(5-Phenyl-2-oxadiazolyl)-1,3,3,5,6-pentamethylspiro(indolin-2,3′-3-naphth(2,1-b)(1,4) oxazin)
Benzoesäure 1,3,3,5,6-Pentamethyl-2-methylen-indolin

| | |
|---|---|
| Smp : | 224 °C - 226 °C |
| $^1$H-NMR ($CDCl_3$): | 1,33; s; 6H; 3,3-$(CH_3)_2$ |
| | 2,21; s; 3H; 5-$CH_3$ |
| | 2,26; s; 3H; 6-$CH_3$ |
| | 2,64; s; 3H; N-$CH_3$ |
| | 6,88; s; 1H; 7-H |
| | 7,65; s; 1H; 2′-H |
| | 8,31; s; 1H; 6′-H |

Beispiel 6

| | |
|---|---|
| $^1$H-NMR (DMSO): | 0,83; t; 3H; 3-Ethyl |
| | 1,34, s; 6H; 3-$CH_3$ |
| | 1,60; q; 2H; 3-Ethyl |
| | 2,70; s; 3H; N-$CH_3$ |
| | 7,70; s; 1H, 2′-H |
| | 8,42; s; 1H; 6′-H |
| | 11,4; br,s; 1H; OH |

Beispiel 7

5-Amino-5′-(5-(2-hydroxyphenyl)-2-oxadiazolyl)-1-isopropyl-3,3-dimethylspiro (indolin-2,3′-3H-naphth(2,1-b)-(1,4)oxazin)
Salicylsäure 5-Amino-1-isopropyl-3,3-dimethyl-2-methylen-indolin

| | |
|---|---|
| Smp: | 146 °C (Z.) |
| $^1$H-NMR (DMSO): | 1,35; s; 6H; 3,3-$(CH_3)_2$ |
| | 1,42; d; 6H; 1-isopropyl |
| | 3,66; m; 1H; 1-isopropyl |
| | 3,84; br; 2H, $NH_2$ |
| | 6,47; s; 1; 4-H |
| | 7,63; s; 1H; 2′-H |
| | 8,42; s; 1H; 6′-H |
| | 11,0; br,s; 1H; OH |

Beispiel 8

5′-(5-Methyl-2-oxadiazolyl)-5,6-Dimethoxy-1,3,3-trimethylspiro (indolin-2,3′-3H-naphth2,1-b)(1,4)oxazin)
Essigsäure 5,6-dimethoxy-1,3,3-trimethyl-2-methylen-indolin

| | |
|---|---|
| Smp. | 196 °C |
| $^1$H-NMR ($CDCl_3$): | 1,33; s; 6H; 3,3-$CH_3)_2$ |
| | 2,19; s; 3H; Oxadiazolyl-$CH_3$ |

2,62; s; 3H; N-$CH_3$
3,78; s; 6H; 5,6-$CH_3$
6,61; s; 1H; 7-H
7,62; s; 1H; 2′-H
8,34; s; 1H; 6′-H

Die folgenden Beispiele können beispielsweise mit dem für Beispiel 9 exemplarisch angegebenen Herstellverfahren hergestellt werden:

Beispiel 9

In 300 ml siedendem Tovol werden 28,2 g 2-Hydroxy-3-naphthoesäure und 21 g o-Amino-thiophenol gelöst. Nach dem abkühlen auf 90° C werden 13,1 ml $PCl_3$ in 75 ml Toluol zugetropft, wobei ein gelber, flockiger Niederschlag ausfällt. Die Mischung wird anschließend 2 h gekocht und nach dem Abkühlen auf 60° C in 600 ml Methanol gegossen. Nach einigen Minuten beginnt die Kristallisation des hellgelben 2-Hydroxy-3-(2-benzthiazolyl)-naphthalins. Die erkaltete Lösung wird filtriert, das Produkt mit Methanol gewaschen und bei 60° C Vakuum getrocknet. (Ausbeute 18 g).

Die Nitrosierung erfolgt in 72 g Eisessig bei 5-10 ° C mit 18g $NaNO_2$ in konzentrierter wässriger Lösung. Das Gemisch wird nach 3 h bei 5 ° C gerührt und dann in 200 ml Eiswasser gegeben. Das ausgefallene hellbraune Nitrosoprodukt wird zuerst mit wenig kaltem Ethanol, anschließend mit eiskaltem (o° c) Ether gewaschen und getrocknet.

Die Ausbeute an orangegelbem 3-(2-Benzthiazolyl)-2-hydroxy-1-nitrosonaphthalin (Fp. 179 °C) ist praktisch quantiativ.

4 g der Nitrosoverbindung werden mit 4 g 1,3,3,-Trimethyl-2-methylen-indolin in 100 ml absolutem Ethanol und 0,5 ml Piperidin 2 h unter Rückfluß gekocht. Das Lösemittel wird anschließend abgezogen, der Rückstand mit $CH_2Cl_2$ an $Al_2O_3$ chromatographiert.

Die grünblaue Zone wird aufgefangen. Nach dem Abzug des Lösemittels verbleibt 5′-(2-Benzthiazoly)-1,3,3-trimethyl spiro (indolino-2,3′-3H-naphth (2,1-b) (1,4) oxazin) als sandfarbenes Pulver vom Schmelzpunkt 214 ° C Die so erhaltene Verbindung hat folgende NMR-Daten:

| | |
|---|---|
| $^1$H-NMR($CDCl_3$): | 1,35; s; 6H; 3,3-$(CH_3)_2$ |
| | 2,64; s; 3H; -$CH_3$ |
| | 7,79; s; 1H; 2′-H |
| | 8,70; s; 1H; 6′-H |

Die nachfolgend aufgeführten Verbindungen, für die Schmelzpunkt und $^1$H-NMR-Daten angegeben sind, können in analoger Weise zu Beispiel 9 durch Umsetzung der 2-Hydroxy-3-naphthoesäure mit den entsprechenden o-Amino-hydroxy- bzw. o-Amino-mercapto-Verbindungen, Nitrosierung des Produktes und anschließende Umsetzung mit den entsprechenden Indolinbasen erhalten werden.

Beispiel 10

5′-(2-Benzoxazoly)-1,3,3-trimethylspiro (indolin-2,3′-3H-naphth(2,1-b)(1,4)oxazin)
o-Amino-phenol 1,3,3-Trimethyl-2-methylen-indolin

| | |
|---|---|
| Smp: | 233 ° C |
| $^1$H-NMR ($CDCl_3$): | 1,33; s; 6H; 3,3-$(CH_3)_2$ |
| | 2,66; s; 3H; N-$CH_3$ |
| | 7,76; s; 1H; 2′-H |
| | 8,52; s; 1H; 6′-H |

Beispiel 11

5-Methoxy-5′-(2-Benzoxazoly)-1,3,3-trimethylspiro (indolin-2,3′-3H-naphth)2,1-b)oxazin)
o-Amino-phenol 5-Methoxy-1,3,3-trimethyl-2-methylen-indolin

| | |
|---|---|
| Smp: | 157 °C |
| $^1$H-NMR ($CDCl_3$): | 1,32; s; 6H; 3,3-$(CH_3)_2$ |
| | 2,64; s; 3H; N-$CH_3$ |
| | 3,70; s; 3H; 0-$CH_3$ |
| | 7,74; s; 1H; 2′-H |

8,50; s; 1H; 6′-H

Beispiel 12

5′-(2-Benzoxazoly)-1-Ethyl-3,3,5,6-tetramethylspiro (indolin-2,3′-3H-naphth(2,1-b)(1,4)oxazin) o-Amino-phenol 1-Ethyl-3,3,5,6-tetramethyl-2-methylen-indolin

| | |
|---|---|
| Smp: | 211 °C |
| $^1$H-NMR ($CDCl_3$): | 1,28; s; 6H; 3,3-$(CH_3)_2$ |
| | 1,33; t; 3H; 1-Ethyl |
| | 2,23; s; 3H; 5-$CH_3$ |
| | 2,30; s; 3H; 6-$CH_3$ |
| | 3,26; q; 2H; 1-ethyl |
| | 7,80; s; 1H; 2′-H |
| | 8,54; s; 1H; 6′-H |

5′-2-Benzthiazoly)-1,3,3,5,6-pentamethylspiro (indolin-2,3′-3H-naphth (2,1-b)(1,4)oxazin)
o-Amino-thiophenol 1,3,3,5,6-Pentamethyl -2-methylen-indolin

| | |
|---|---|
| Smp: | 193 °C |
| $^1$H-NMR ($CDCl_3$): | 1,34; s; 6H; 3,3-$(CH_3)_2$ |
| | 2,21; s; 6H; 5,6-$CH_3$ |
| | 2,66; s; 3H; N-$CH_3$ |
| | 6,82; s; 1H; 7-H |
| | 6,98; s; 1H; 4-H |
| | 7,75; s; 1H; 2′-H |
| | 8,63; s; 1H; 6′-H |

Beispiel 14

5-Amino-5′-(2-Benzthiazolyl)-1,3,3-trimethylspiro (indolin-2,3′-3H-naphth (2,1-b) (1,4)oxazin)
o-Amino-thiophenol 5-Amino-1,3,3,-trimethyl-2-methylen-indolin

| | |
|---|---|
| Smp: | 141 °C (Z.) |
| $^1$H-NMR ($CDCL_3$): | 1,33; s; 6H; 3,3-$(CH_3)_2$ |
| | 2,64; s; 3H; N-$CH_3$ |
| | 3,20; br; 2H; $NH_2$ |
| | 6,43; s; 1H; 4-/6-H |
| | 7,79; s; 1H; 2′-H |
| | 8,59; s; 1H; 6′-H |

Die erfindungsgemäßen Verbindungen haben u.a. den Vorteil, daß ihre Farbe im Vergleich zu bekannten Verbindungen "ins Grüne" verschoben ist. Dies zeigt die einzige Figur, in der ein Vergleich der Absorption an der Grenze UV-/sichtbares Licht zwischen 9′-Methoxy-1,3,3-trimethylspiro (indolin-2,3′-3H-naphth (2,1-b)-(1,4)oxazin), d.h. einer in der US-PS 4 215 010 angegebenen Verbindung und 5′-(5-Methyl-2-oxadiazolyl)-1,3,3-trimethylspiro(indolin-2,3′-3-H-naphth(2,1-b)(1,4)oxazin), d.h. dem Beispiel 1 der vorliegenden Erfindung angegeben ist.

Ein weiterer Vorteil ist die erhöhte Lebensdauervergleich. Nachstehend ist ein Vergleich zwischen einem ebenfalls in 5′-Stellung elektronenziehend substituierten Spironaphthoxazin 1,3,3-Trimethylspiro-(indolin-2,3′-3H-naphth(2,1-b)(1,4)oxazin-5′-methylcarboxylat und dem Beispiel 1 dieser Anmeldung angegeben:

relative Leistung eines eingefärbten mit einer erfindungsgemäßen Verbindung eingefärbten Kunststoffglases (in %).

| Xenonbelastung (h) | Beispiel | Stand der Technik |
|---|---|---|
| 5 | 98,8 | 79,3 |
| 10 | 97,6 | 43,6 |
| 15 | 93,3 | 22,1 |
| 25 | 84,7 | 4,9 |
| 50 | 51,1 | - |
| 75 | 25,2 | - |

Die rel. Leistung ist definiert mit dem Quotienten der optischen Dichte-Differenz (V -bewertet) zwischen aufgehelltem und belichteten Zustand nach x h Xenonbelastung und dem Ausgangszustand:

$$100 * \frac{OD\ (x\ h)}{OD\ (0\ H)} = rel.L.\ (\%)$$

Die Transmission nach V im aufgehellten Zustand wird nach 1 h Aufhellung bei 80 °C und nachfolgender Abkühlung auf Raumtemperatur gemessen ( $_o$).

Die Transmission in eingedunktelen Zustand wird bei 23 °Cnach 15-minütigger Belichtung mit 60 klux unter einem Winkel von 30° gemessen ( $_s$)

$OD = {}^{10}\log{}_o - {}^{10}\log{}_s$

Die Xenonbelastung erfolgte mit einem handelsüblichen Belichtungs/Bewitterungsmeßgerät mit 130 kLux und 40°CSchwarztafeltemperatur.

Die erfindungsgemäßen Verbindungen können darüberhinaus für beliebige Zwecke eingesetzt werden. Von besonderem Vorteil ist jedoch ihre Verwendung in Kunststoffbrillengläsern, in die sie in an sich bekannter Weise eingebracht werden können. Nur exemplarisch sei zu den verschiedenen Einbringmöglichkeiten auf die DE-OS 35 16 568 verwiesen.

**Patentansprüche**

**1.** Photochrome Verbindung der allgemeinen Formel

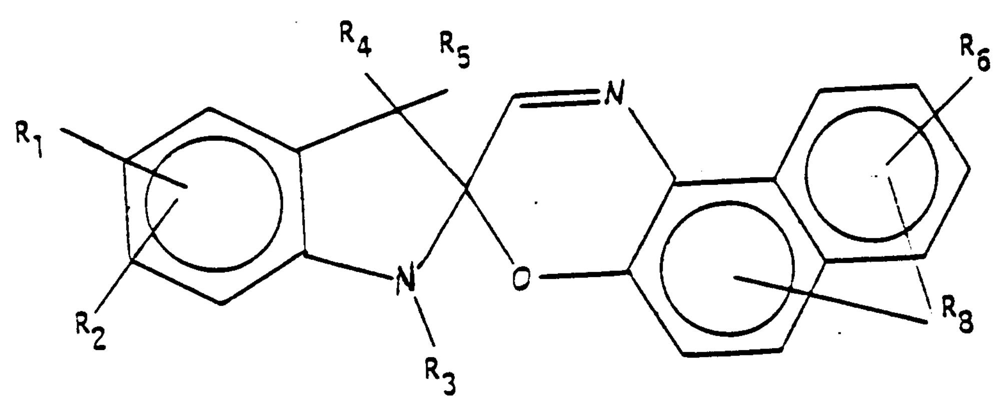

| | |
|---|---|
| $R_1$, $R_2$ = | -CN, $-CF_3$, -Y, -OY, $-NY_2$ |
| | Y = H, Alkylrest mit bis zu 8 C-Atomen, Aryl- oder Heteroarylrest |
| $R_3$, $R_4$, $R_5$ = | $-CH_3$, $-C_2H_5$, $-C_3H_7$, -Phenyl, -Benzyl, -Pyridyl |
| $R_6$ = | -Y, -OY, -CN, $-NO_2$, -Cl, -Br |
| $R_7$ = | -H, $-CH_3$, $-C_2H_5$, -Phenyl, -Benzyl, -Pyridyl, -Naphth(2)yl |

$R_8$ ein

Oxadiazol-

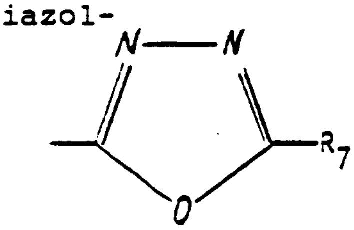

Oxazol-

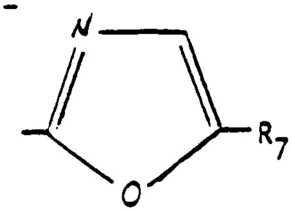

Thiazol-

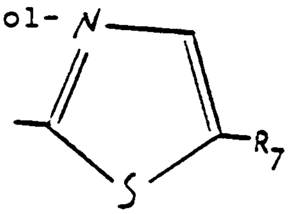

Benzooxazol-

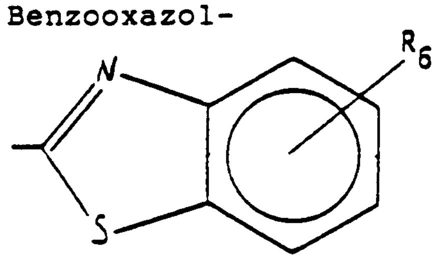

Benzthiazol-

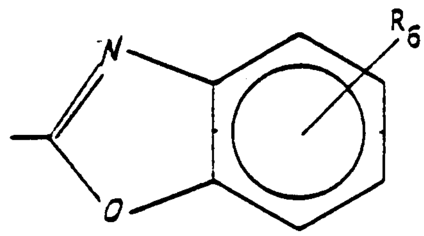

Ring ist.

2. Verbindung nach Anspruch 1,
dadurch **gekennzeichnet**, daß $R_8$ als Substituent in 5′-, 6′-, 8′- oder 9′-Stellung steht.

3. Verbindung nach Anspruch 1 oder 2,
dadurch **gekennzeichnet**, daß der Oxadiazolring in 5′-Stellung im Naphthoxazin-System steht und $R_7$ -$CH_3$ ist.

4. Verbindung nach Anspruch 1 oder 2,
dadurch **gekennzeichnet**, daß der Oxadiazolring in 5′-Stellung im Naphthoxazinsystem steht und $R_6$ 6′-OH ist.

5. Verbindung nach Anspruch 1 oder 2,
dadurch **gekennzeichnet**, daß $R_8$ als Substituent in 8′- oder 9′-Stellung steht und $R_6$ 9′-OH bzw. 8′-OH ist.

6. Verbindung nach einem der Ansprüche 1, 2, 4 oder 5,
dadurch **gekennzeichnet**, daß $R_7$ in Ortho-Stellung -OH substituierte aromatische Reste sind.

7. Verbindung nach einem der Ansprüche 1 bis 6,
dadurch **gekennzeichnet**, daß $R_4$ und $R_5$ einen $C_5$-$C_7$ Cycloalkanring schließen.

## Claims

1. Photochromic compound of the general formula

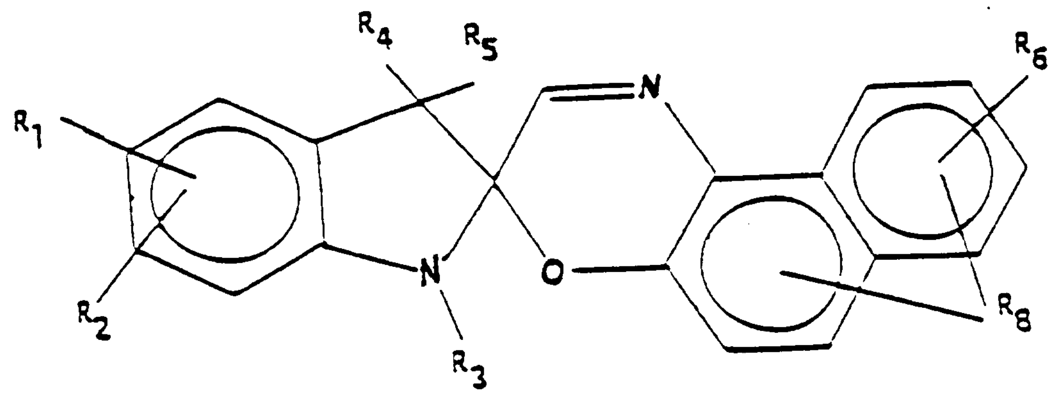

| | |
|---|---|
| $R_1$, $R_2$ = | -CN, $-CF_3$, -Y, -OY, $-NY_2$ |
| | Y = H, alkyl residue with up to 8 C atoms aryl or heteroaryl residue |
| $R_3$, $R_4$, $R_5$ = | $-CH_3$, $-C_2H_5$, $-C_3H_7$, -phenyl, -benzyl, -pyridyl |
| $R_6$ = | -Y, -OY, -CN, $-NO_2$, -Cl, -Br |
| $R_7$ = | -H, $-CH_3$, $-C_2H_5$, -phenyl, benzyl, -pyridyl, -naphth(2)yl |

$R_8$ is a

Oxadiazol-

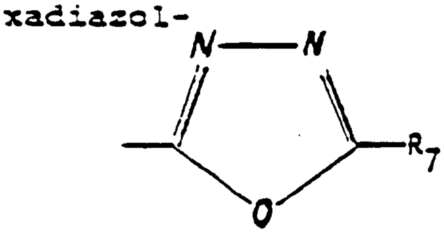

Benzooxazol-

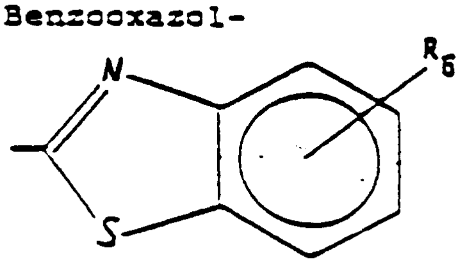

Oxazol-

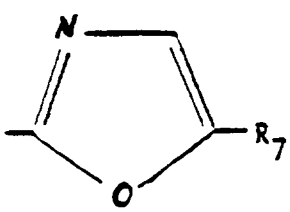

Benzthiazol-

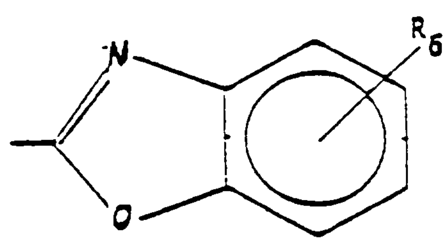

Thiazol-

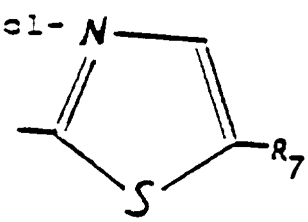

ring.

2. Compound according to Claim 1.
characterised by the fact that $R_8$ is in the 5', 6', 8' or 9' position as the substituent.

**3.** Compound according to Claim 1 or 2, characterised by the fact that the oxadiazol ring is in position 5' in the naphthoxazine system and that $R_7$ is $-CH_3$.-

**4.** Compound according to Claim 1 or 2, characterised by the fact that the oxadiazol ring is in position 5' in the naphthaoxazine system and that $R_6$ is 6'-OH.

**5.** Compound according to Claim 1 or 2 characterised by the fact that $R_8$ is in the 8' or 9' position as the substitute and $R_6$ is 9'-OH or 8'-OH.

**6.** Compound according to any of Claims 1, 2, 4 or 5, characterised by the fact that $R_7$ in the ortho position is -OH substituted aromatic residues.

**7.** Compound according to any of Claims 1 to 6, characterised by the fact that $R_4$ and $R_5$ close a $C_5$-$C_7$ cycloalkan ring.

**Revendications**

**1.** Composé photochrome de formule générale

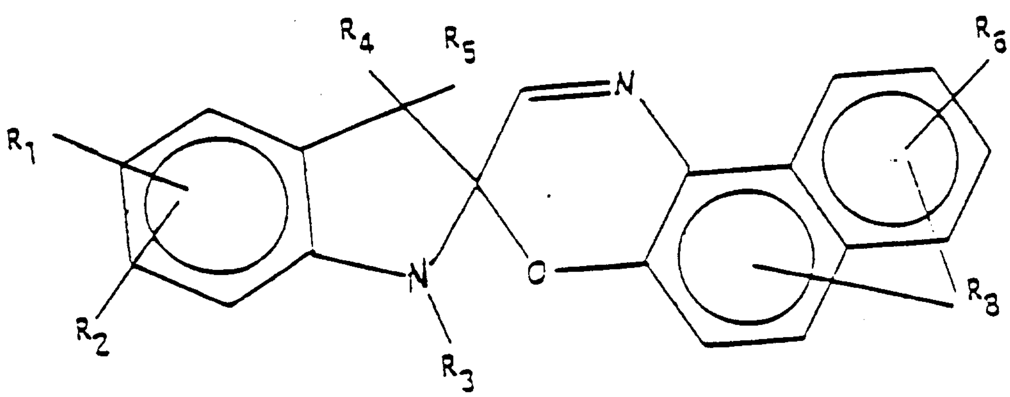

dans laquelle

$R_1$ et $R_2$ représentent chacun -CN, $-CF_3$, -Y, -OY, $-NY_2$, avec Y représentant H, un reste alkyle ayant jusqu'à 8 atomes de carbone, un reste aryle ou hétéroaryle,

$R_3$, $R_4$, $R_5$ représentent chacun $-CH_3$, $-C_2H_5$, $-C_3H_7$, un groupe phényle, benzyle, pyridyle,

$R_6$ représente -Y, -OY, -CN, $-NO_2$, -Cl, -Br,

$R_7$ représente -N, $-CH_3$, $-C_2H_5$, un reste phényle, benzyle, pyridyle, napht(2)yle,

$R_8$ représente un noyau

oxadiazole

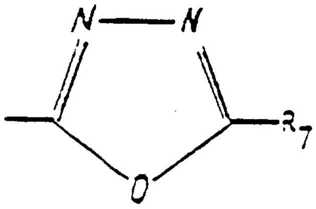

benzoxazole

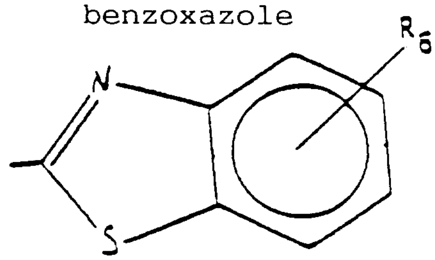

oxazole

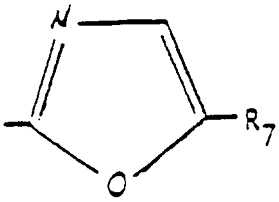

benzothiazole

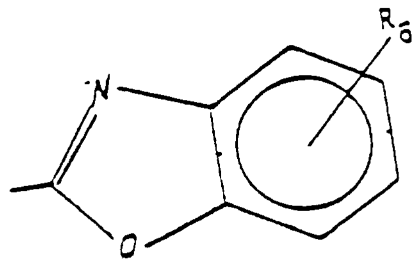

thiazole

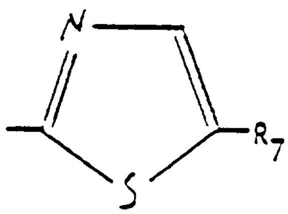

**2.** Composé selon la revendication 1, caractérisé en ce que $R_8$ est fixé comme substituant en position 5', 6', 8' ou 9'.

**3.** Composé selon la revendication 1 ou 2, caractérisé en ce que le noyau oxadiazole se trouve en position 5' du système naphtoxazine et $R_7$ représente $-CH_3$.

**4.** Composé selon la revendication 1 ou 2, caractérisé en ce que le noyau oxadiazole se trouve en position 5' dans le système de naphtoxazine, et $R_6$ représente un groupe -OH en position 6'.

**5.** Composé selon la revendication 1 ou 2, caractérisé en ce que $R_8$ représente un substituant fixé en position 8' ou 9' et $R_6$ représente un reste 9'-OH (reste OH en position 9') ou 8'-OH (reste OH en position 8').

**6.** Composé selon l'une des revendications 1, 2, 4 ou 5, caractérisé en ce que $R_7$ représente des restes aromatiques comportant un groupe -OH en position ortho.

**7.** Composé selon l'une des revendications 1 à 6, caractérisé en ce que $R_4$ et $R_5$ forment ensemble un noyau cycloalcane en $C_5$ à $C_7$.